# EUROPÄISCHE PATENTSCHRIFT

(11) **EP 3 261 985 B1**
(45) Veröffentlichungstag und Bekanntmachung des Hinweises auf die Patenterteilung: **24.10.2018**
(21) Anmeldenummer: 16700744.2
(22) Anmeldetag: 15.01.2016
(51) Int. Cl.: C01B 13/11, H01T 19/00

(54) **OZONGENERATOR MIT POSITIONSABHÄNGIGER ENTLADUNGSVERTEILUNG**
OZONE GENERATOR WITH POSITION-DEPENDENT DISCHARGE DISTRIBUTION
OZONISEUR À RÉPARTITION DE DÉCHARGE DÉPENDANT DE LA POSITION

(30) Priorität: 23.02.2015 DE 102015002102
(43) Veröffentlichungstag der Anmeldung: 03.01.2018
(73) Patentinhaber: Xylem IP Management S.à.r.l., 1259 Senningerberg (LU)
(72) Erfinder: FIEKENS, Ralf, 33758 Schlossholte-Stukenbrock (DE); FIETZEK, Reiner, 32049 Herford (DE); SALVERMOSER, Manfred, 32049 Herford (DE); BRÜGGEMANN, Nicole, 32130 Enger (DE)
(74) Vertreter: Lenzing Gerber Stute
(86) Internationale Anmeldenummer: PCT/EP2016/050761
(87) Internationale Veröffentlichungsnummer: WO 2016/134878

(56) Entgegenhaltungen:
- WO-A1-92/14677
- WO-A1-97/09268
- US-A- 5 956 562

## Beschreibung

Die vorliegende Erfindung betrifft einen Ozongenerator mit den Merkmalen des Oberbegriffs des Anspruchs 1 sowie einen damit ausgestatteten Ozonerzeuger.

Gattungsgemäße Ozonerzeuger umfassen eine Vielzahl von Ozongeneratoren, die nach Art eines Rohrbündelwärmetauschers parallel zueinander zwischen zwei Rohrböden angeordnet sind. Die Rohre bilden in ihrem Innenraum Entladungsräume in Form von Hohlkathoden. In diesen Entladungsräumen sind Anodenstäbe mit Dielektrikum angeordnet, die im Betrieb mit einer Hochspannung beaufschlagt werden und die eine stille Entladung zwischen dem Anodenstab und dem Rohr hervorrufen. Durch diesen Zwischenraum wird sauerstoffhaltiges Gas oder reiner Sauerstoff geleitet. Die stille Entladung erzeugt in dem sauerstoffhaltigen Gas aus Sauerstoffmolekülen Ozonmoleküle. Der auf diese Weise mit Ozon angereicherte Gasstrom kann dann beispielsweise zu Desinfektionszwecken verwendet werden.

Der größte Teil der elektrischen Leistung, die einem Ozongenerator zugeführt werden muss, fällt als Abwärme an. Diese Abwärme wird durch Kühlmaßnahmen, wie beispielsweise durch eine Flüssigkeitskühlung der Außenelektrode abgeführt. Dabei heizt sich das Kühlwasser beim Durchtritt durch das Rohrbündel auf und wird in einem Kreislauf durch einen Wärmetauscher in einem Kühlaggregat auf eine Temperatur von wenigen Grad Celsius abgekühlt.

Ein Mechanismus, der den Wirkungsgrad eines Ozonerzeugers verschlechtert, ist der sich entlang der Rohre zwischen dem Kühlwassereintritt und dem Kühlwasseraustritt unvermeidbar entstehende Temperaturgradient.

Der Wirkungsgrad von Ozonerzeugern ist stark von der Temperatur im Entladungsspalt abhängig. Die Bildung von Ozon findet bevorzugt bei niedriger Temperatur statt. Zudem zerfällt das Ozon vermehrt mit steigender Temperatur. Dieser temperaturinduzierte Abbau von Ozon verringert den gesamten Wirkungsgrad des Ozonerzeugers. Um die Ozonausbeute zu erhöhen ist daher eine gezielte Beeinflussung der effektiven Reaktionstemperatur entlang des Ozongenerators erwünscht.
Aus der JP-H-0881205 ist ein Ozongenerator bekannt, der eine konische Außenelektrode aufweist, die in Anlage mit einem Dielektrikum steht, dass in einer ersten Ausführungsform eine über die Länge des Ozongenerators zunehmende Dicke und in einem zweiten Ausführungsbeispiel eine konstante Dicke aufweist. Diese Ausgestaltungen haben gemeinsam, dass die im Gasspalt über die Länge des Ozongenerators eingetragene Leistung kontinuierlich abnimmt. Dadurch wird die Temperaturerhöhung über die Länge des Ozongenerators reduziert, wodurch die effektive Reaktionstemperatur nahezu konstant gehalten werden kann. Nachteilig ist dabei, dass die Herstellung der Außenelektrode und des Dielektrikums relativ aufwendig und kostenintensiv ist.

WO92/14677 offenbart einen Ozongenerator mit einer Hochspannungselektrode und einer Gegenelektrode. Die beide Elektroden sind aus Drahtwindungen ausgebildet. Die Abstände zwischen den Windungen können variiert werden. Es ist Aufgabe der vorliegenden Erfindung, einen Ozongenerator anzugeben, bei dem der Wirkungsgrad durch Verminderung der der Elektrodenoberflächeneinheit zugeführten elektrischen Leistung in Strömungsrichtung des Gases erhöht wird, wobei der Ozongenerator möglichst einfach und kostengünstig aufgebaut ist.
Diese Aufgabe wird von einem Ozongenerator mit den Merkmalen des Anspruchs 1 gelöst.
Danach ist ein Ozongenerator mit einer Hochspannungselektrode und wenigstens einer Gegenelektrode vorgesehen, die einen Zwischenraum begrenzen, in dem wenigstens ein Dielektrikum angeordnet ist und der von einem Gas in Strömungsrichtung durchströmt wird, wobei die Hochspannungselektrode und die wenigstens eine Gegenelektrode mit einem Anschluss für eine elektrische Spannungsversorgung zur Erzeugung von stillen Entladungen, die von Oberflächenpunkten ausgesehen, versehen sind, und wobei der mittlere Abstand zwischen der Hochspannungselektrode und der wenigstens einen Gegenelektrode und die mittlere Schlagweite konstant sind, wobei die Anzahl von Oberflächenpunkten von denen die stillen Entladungen ausgehen in Strömungsrichtung abnimmt. Durch diese Variation der Oberflächenpunkte kann die eingetragene elektrische Leistung und somit die effektive Reaktionstemperatur beeinflusst werden. Die Anzahl der Oberflächenpunkte nimmt pro Längeneinheit ab. Da der mittlere Abstand zwischen der Hochspannungselektrode und der wenigstens einen Gegenelektrode und die mittlere Schlagweite konstant ist, ist dieser Ozongenerator einfach und kostengünstig herzustellen.

Vorzugsweise nimmt die Anzahl der Oberflächenpunkte die für elektrische Entladungen zur Verfügung stehen kontinuierlich ab.

In einer Ausführungsform ist vorgesehen, dass die Oberflächenpunkte durch eine Profilierung der Hochspannungselektrode gebildet sind. Es kann aber auch vorgesehen sein, dass das Dielektrikum und/oder die Hochspannungselektrode profiliert sind. Außerdem kann der gleiche Effekt erzielt werden, wenn die Gegenelektrode auf der Innenseite profiliert ist.

Vorzugsweise sind die Oberflächenpunkte durch ein Drahtgeflecht gebildet. Dabei kann das Drahtgeflecht unteranderem selbst die Hochspannungselektrode bilden oder Teil der Hochspannungselektrode sein.

Bevorzugt weist der Ozongenerator eine einzige Gegenelektrode auf und das Dielektrikum ist in Anlage an die Gegenelektrode angeordnet. Der Ozongenerator ist somit als Einspaltsystem gestaltet. Die Schlagweite ist dabei definiert als der Abstand zwischen dem Dielektrikum und der Hochspannungselektrode.

Der Ozongenerator kann als Röhren- oder Plattenozonerzeuger ausgebildet sein. In einem Plattenozonerzeuger sind die Hochspannungselektrode und die wenigstens eine Gegenelektrode Platten.

Weiterhin ist es wegen der beschriebenen technischen Vorteile vorteilhaft, einen Ozonerzeuger zur Desinfektion von Wasser oder zur Bleiche von Holzstoff, Zellstoff, oder Pulpe in der Papierherstellung herzustellen und zu verwenden, der wenigstens einen Ozongenerator mit einem der vorhergehenden Merkmale aufweist.

Eine bevorzugte Ausführungsform der Erfindung wird nachfolgend anhand der Zeichnungen näher erläutert. Es zeigen:
- Fig. 1:: eine perspektive Darstellung einer Elektrodenanordnung aus dem Stand der Technik, sowie
- Fig. 2:: eine schematische Darstellung eines erfindungsgemäßen Drahtgeflechts.

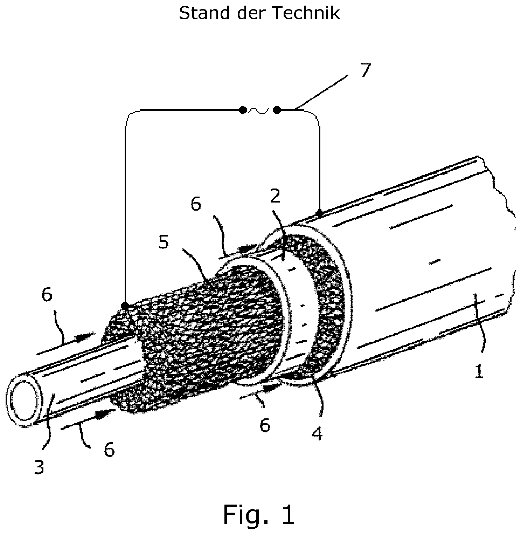

Figur 1 zeigt eine Elektrodenanordnung eines Ozongenerators, wie sie aus DE 10 2011 008 947 A1 bekannt ist. Solche Ozongeneratoren werden gruppiert in einem Ozonerzeuger eingesetzt. Die Ozongeneratoren sind dabei nach Art eines Rohrbündelwärmetauschers parallel zueinander zwischen zwei Rohrböden angeordnet und elektrisch parallel geschaltet. Der gezeigte Ozongenerator weist eine rohrförmigen Außenelektrode 1, ein ebenfalls rohrförmigen Dielektrikum 2 und einen innenliegenden Stab 3 auf, wobei die einzelnen Komponenten verkürzt und in Axialrichtung auseinander gezogen dargestellt sind. Die Anordnung ist rotationssymmetrisch. Die Außenelektrode 1, das Dielektrikum 2 und der Stab 3 sind konzentrisch zueinander ausgerichtet. Zwischen der Außenelektrode 1 und dem Dielektrikum 2 liegt ein Drahtgestrick 4, das den Zwischenraum ausfüllt. Entsprechend ist zwischen dem Dielektrikum 2 und dem Stab 3 ein Drahtgestrick 5 vorgesehen, das den dort befindlichen Zwischenraum ebenfalls ausfüllt. Die Außenelektrode 1 ist als Edelstahlrohr ausgebildet. Die bei der Ozonproduktion entstehende Abwärme wird durch Kühlwasser, welches an der Außenseite der Außenelektrode zwischen den Rohrböden entlang geführt wird, gekühlt. Das Dielektrikum 2 ist ein Glasrohr. Die Drahtgestricke 4 und 5 sind vorzugsweise als sogenannte Rundhohlschnur ebenfalls aus einem Drahtgestrick aus Edelstahl gefertigt. Der im Zentrum der Elektrodenanordnung angeordnete Stab 3 ist ein Isolator, beispielsweise aus Glas oder aus einem anderen sauerstoff- und ozonkompatiblen Material gefertigt. Der Stab 3 kann massiv ausgeführt sein. Im Betrieb wird die Elektrodenanordnung mit einem sauerstoffhaltigen Einsatzgas beaufschlagt, welches die Drahtgestricke 4 und 5 in Richtung der Pfeile 6 durchströmt. Schematisch ist eine elektrische Spannungsversorgung 7 angedeutet, die einerseits mit der Außenelektrode 1 und andererseits mit dem Gestrick 5 kontaktiert ist. Die von der Spannungsversorgung 7 zur Verfügung gestellte Betriebsspannung bewirkt in dem Raum zwischen den Elektroden 1, 5 und dem Dielektrikum 2 eine stille elektrische Entladung, die aus dem Sauerstoff, der in Richtung der Pfeile 6 durch die Gestricke 4 und 5 strömt, Ozon generiert.

Bei dem dargestellten Aufbau ist die innere Elektrode allein von dem Gestrick 5 gebildet, während der Stab 3 als Isolator eine stützende Funktion ausübt, die das gleichmäßige Ausfüllen des Innenraums des Dielektrikums 2 mit dem Drahtgestrick 5 gewährleistet. Die Spaltweite bzw. die Schlagweite d ist der Abstand zwischen einer Elektrode und dem Dielektrikum. Die elektrische Spannungsversorgung 10 versorgt den Ozongenerator mit einer sinusförmigen Spannung. Durch die Form der Elektrode kommt es zu einer Überlagerung von Volumen- und Oberflächenladung.

Im Gegensatz zu Ozongeneratoren, die eine definierte Spaltweite besitzen, ergeben sich durch die Profilierung der Hochspannungselektrode 5 spezifische Oberflächenpunkte, von denen die stillen Entladungen ausgehen.

Die Temperatur im Gasspalt hängt unteranderem von der Wandtemperatur (Kühlmitteltemperatur) aber auch von der eingetragenen elektrischen Leistung ab. Die eingetragene elektrische Leistung ist wiederrum abhängig von der gezündeten Spaltweite und der Anzahl der Entladungen.

Erfindungsgemäß werden die zur Entladung zur Verfügung stehenden Oberflächenpunkte entlang des Ozongenerators variiert, so dass die eingetragene elektrische Leistung in Strömungsrichtung des Gases abnimmt. Die mittlere Spaltweite bleibt dabei im Wesentlichen konstant und die Anzahl der Entladungen pro Längeneinheit nimmt ab.

Die Variation der Oberflächenpunkte kann dabei sowohl kontinuierlich als auch diskontinuierlich erfolgen.

Die Anzahl der Entladungen pro Längeneinheit wird entlang des Ozonerzeugers durch eine Veränderung der Verteilung der Oberflächenpunkte, von denen Entladungen ausgehen, beeinflusst. Der Abstand zwischen der Außen- und der Innenelektrode sowie die Schlagweite bleibt dabei im Mittel konstant.

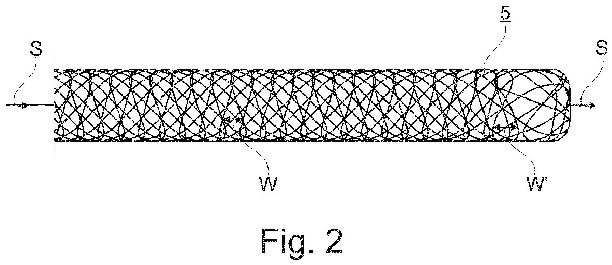

In einer ersten Ausführungsform ist es vorgesehen, die Verteilung der Oberflächenpunkte durch eine Veränderung der Profilierung einer der Elektroden zu erzeugen. Die Profilierung der Elektrode erzeugt eine Verteilung von spezifischen Oberflächenpunkten, von denen Entladungen ausgehen. Die restliche Fläche der Elektrode steht nicht für die Erzeugung von Entladungen zur Verfügung. Durch Variation der Profilierung bzw. Oberflächenpunkte in Strömungsrichtung des Gases kann die Anzahl der Entladungen pro Längeneinheit reduziert werden. Eine Variationsmöglichkeit besteht darin, bei einer Elektrode 5 aus Drahtgeflecht, die Maschenweite W, W' anzupassen, siehe Figur 2. Die Maschenweite W, W' nimmt dabei in Strömungsrichtung S zu, so dass die Anzahl der Entladungen pro Längeneinheit in Strömungsrichtung S abnimmt.

Die Hochspannungselektrode ist ein elektrisch leitendes Material, vorzugsweise Edelstahl mit profilierter Oberfläche. Die Hochspannungselektrode kann ein Drahtgeflecht oder ein Gestrick, ein Gewebe aber auch eine Drahtwicklung oder ein auf einer Oberfläche aufgebrachtes Granulat sein. Faserige Gebilde wie Fliese oder Filze sind ebenso geeignet wie Strukturen, die durch mechanische Bearbeitung oder durch Beschichtung, auf die Elektrode aufgebracht werden. Dabei ist die Profilierung vorzugsweise stochastisch oder periodisch sowohl in Längs- als auch in Umfangsrichtung der Elektrode verteilt. In einer Ausführungsform, erstreckt sich diese Hochspannungselektrode bis ans Dielektrikum, d.h. es gibt Punkte an denen das Geflecht, Gewebe oder dergleichen an dem Dielektrikum anliegt.

Es ist aber auch denkbar, anstelle der Elektrode das Dielektrikum zu profilieren, wodurch der gleiche Effekt erzielt werden kann.

Der erfindungsgemäße Ozongenerator ist nicht auf rohrförmige Elektrodenanordnung begrenzt. Es kann sowohl bei Röhren- als auch bei Plattenozonerzeugern verwendet werden. Dabei ist die Anwendung bei Einspalt- als auch Mehrspaltsystemen vorgesehen. Das elektrisch leitende Material der Elektrode kann mit oder ohne Trägermaterial in den Entladungsraum eingebracht werden.

Durch die erfindungsgemäße Variation der Oberflächenpunkte, von denen Entladungen ausgehen, ist es möglich, die der Elektrodenoberflächeneinheit zugeführte elektrische Leistung in Strömungsrichtung des Gases zu verringern und somit Einfluss auf die Gastemperatur im Entladungsspalt zu nehmen und den Wirkungsgrad des Ozongenerators zu erhöhen. Durch die besonders einfache Geometrie der Elektrodenanordnung ist der Ozongenerator einfach und kostengünstig herzustellen.

## Patentansprüche

1. Ozongenerator mit einer Hochspannungselektrode (5) und wenigstens einer Gegenelektrode (1), die einen Zwischenraum begrenzen, in dem wenigstens ein Dielektrikum (2) angeordnet ist und der von einem Gas in Strömungsrichtung durchströmt wird, wobei die Hochspannungselektrode (5) und die wenigstens eine Gegenelektrode (1) mit einem Anschluss für eine elektrische Spannungsversorgung (7) zur Erzeugung von stillen Entladungen, die von Oberflächenpunkten ausgehen, versehen sind, und wobei der mittlere Abstand zwischen der Hochspannungselektrode (5) und der wenigstens einen Gegenelektrode (1) und die mittlere Schlagweite konstant sind, **dadurch gekennzeichnet, dass** die Anzahl von Oberflächenpunkten, von denen die stillen Entladungen ausgehen, in Strömungsrichtung abnimmt.

2. Ozongenerator nach Anspruch 1, **dadurch gekennzeichnet, dass** die Anzahl von Oberflächenpunkten von denen die stillen Entladungen ausgehen in Strömungsrichtung kontinuierlich abnimmt.

3. Ozongenerator nach Anspruch 1 oder 2, **dadurch gekennzeichnet, dass** die Oberflächenpunkte auf der Hochspannungselektrode (5) angeordnet sind.

4. Ozongenerator nach einem der vorhergehenden Ansprüche, **dadurch gekennzeichnet, dass** die Oberflächenpunkte durch ein Drahtgeflecht (5) gebildet sind.

5. Ozongenerator nach einem der vorhergehenden Ansprüche, **dadurch gekennzeichnet, dass** der Ozongenerator eine einzige Gegenelektrode (1) aufweist und das Dielektrikum (2) in Anlage an die Gegenelektrode (1) angeordnet ist.

6. Ozongenerator nach einem der vorhergehenden Ansprüche, **dadurch gekennzeichnet, dass** die Hochspannungselektrode (5) und die wenigstens eine Gegenelektrode (1) Platten sind und einen Plattenozonerzeuger bilden.

7. Verwendung eines Ozonerzeugers aufweisend wenigstens einen Ozongenerator nach einem der vorhergehenden Ansprüche zur Desinfektion von Wasser.

8. Verwendung eines Ozonerzeugers aufweisend wenigstens einen Ozongenerator nach einem der vorhergehenden Ansprüche 1 bis 6 zur Bleiche von Holzstoff, Zellstoff, oder Pulpe.

## Claims

1. Ozone generator with a high-voltage electrode (5) and at least one counter electrode (1), which define an interstice, in which at least one dielectric (2) is arranged and though which a gas flows in the flow direction, wherein the high-voltage electrode (5) and the at least one counter electrode (1) are provided with a connection for an electrical voltage supply (7) in order to produce silent discharges which are discharged from surface locations, and wherein the mean spacing between the high-voltage electrode (5) and the at least one counter-electrode (1) and the mean sparking distance are constant, **characterized in that** the number of surface locations from which the silent discharges are discharged decreases in the flow direction.

2. Ozone generator according to claim 1, **characterized in that** the number of surface locations from which the silent discharges are discharged continuously decreases in the flow direction.

3. Ozone generator according to claim 1 or 2, **characterized in that** the surface locations are arranged on the high-voltage electrode (5).

4. Ozone generator according to any one of the preceding claims, **characterized in that** the surface locations are formed by a wire braiding (5).

5. Ozone generator according to any one of the preceding claims, **characterized in that** the ozone generator has a single counter-electrode (1) and the dielectric (2) is arranged in abutment with the counter-electrode (1).

6. Ozone generator according to any one of the preceding claims, **characterized in that** the high-voltage electrode (5) and the at least one counter-electrode (1) form plates and a plate-like ozone producer.

7. Use of an ozonizer having at least one ozone generator according to any one of the preceding claims for disinfection of water.

8. Use of an ozonizer having at least one ozone generator according to any one of the preceding claims 1 to 6 for the bleach of wood pulp, chemical pulp or pulp.

## Revendications

1. Générateur d'ozone avec une électrode haute tension (5) et au minimum une contre-électrode (1) délimitant un interstice, dans lequel est disposé au moins un diélectrique (2), et qui est traversé par un gaz dans le sens d'écoulement, l'électrode haute tension (5) et la contre-électrode minimum (1) étant dotées d'une connexion pour une alimentation en tension électrique (7) pour la génération de décharges silencieuses partant de points de surface, la distance moyenne entre l'électrode haute tension (5) et la contre-électrode minimum (1) et la distance moyenne de formation d'étincelles étant constantes, **caractérisé en ce que** le nombre de points de surface d'où partent les décharges silencieuses diminue dans le sens de l'écoulement.

2. Générateur d'ozone selon la revendication 1, **caractérisé en ce que** le nombre de points de surface d'où partent les décharges silencieuses diminue continuellement dans le sens de l'écoulement.

3. Générateur d'ozone selon la revendication 1 ou 2, **caractérisé en ce que** les points de surface sont disposés sur l'électrode haute tension (5).

4. Générateur d'ozone selon l'une des revendications précédentes, **caractérisé en ce que** les points de surface sont constitués par un entrelacement de fils métallique (5).

5. Générateur d'ozone selon l'une des revendications précédentes, **caractérisé en ce que** le générateur d'ozone ne présente qu'une seule contre-électrode (1) et que le diélectrique (2) est accolé à la contre-électrode (1).

6. Générateur d'ozone selon l'une des revendications précédentes, **caractérisé en ce que** l'électrode haute tension (5) et la contre-électrode minimum (1) sont des plaques et constituent un ozoniseur à plaques.

7. Utilisation d'un ozoniseur présentant au moins un générateur d'ozone selon l'une des revendications précédentes pour la désinfection de l'eau.

8. Utilisation d'un ozoniseur présentant au moins un générateur d'ozone selon l'une des revendications 1 à 6 précédentes pour le blanchiment de pâte à bois, pâte cellulosique ou pulpe.
